# NEUE EUROPÄISCHE PATENTSCHRIFT

(11) **EP 3 359 842 B2**
(45) Veröffentlichungstag und Bekanntmachung des Hinweises auf die Entscheidung über den Einspruch: **30.11.2022**
(45) Hinweis auf die Patenterteilung: 18.12.2019
(21) Anmeldenummer: 16778406.5
(22) Anmeldetag: 10.10.2016
(51) Int. Cl.: F16D 65/095, F16D 65/092, F16D 55/00

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 09.10.2015 DE 102015117285; 17.03.2016 DE 102016104969
(43) Veröffentlichungstag der Anmeldung: 15.08.2018
(73) Patentinhaber: KNORR-BREMSE Systeme für Nutzfahrzeuge GmbH, 80809 München (DE)
(72) Erfinder: FRICKE, Jens, 94474 Vilshofen (DE); MOLNAR, Markus, 94081 Fürstenzell (DE); ADELUNG, Matthias, 94081 Fürstenzell (DE); PETSCHKE, Andreas, 94127 Neuburg am Inn (DE); SCHROPP, Josef, 94428 Eichendorf (DE)
(74) Vertreter: Specht, Peter
(86) Internationale Anmeldenummer: PCT/EP2016/074156
(87) Internationale Veröffentlichungsnummer: WO 2017/060514

(56) Entgegenhaltungen:
- EP-A1- 0 352 559
- EP-A1- 2 213 900
- EP-A1- 2 767 726
- WO-A1-2014/028456
- DE-A1- 2 255 678
- DE-A1- 10 358 086
- DE-A1- 19 650 425
- DE-A1- 19 857 074
- DE-A1-102009 009 567
- GB-A- 1 408 681
- US-A1- 2002 029 942
- US-B1- 8 544 614

## Beschreibung

Die Erfindung betrifft eine Scheibenbremse für ein Nutzfahrzeug nach dem Oberbegriff des Anspruchs 1.

Derartige Scheibenbremsen, die auch Schiebesattel-Scheibenbremsen bezeichnet werden, sind hinlänglich bekannt. Dabei sind die Bremsbeläge, die jeweils aus einer Belagträgerplatte und einem darauf gehaltenen Reibbelag bestehen, in Richtung der Bremsscheibenachse in die Belagschächte des ortsfest am Fahrzeug gehaltenen Bremsträgers eingeschoben.

Bei einer Bremsung, wenn die Bremsbeläge gegen die Bremsscheibe gepresst werden, wirkt aufgrund des Reibschlusses zwischen dem Reibbelag des jeweiligen Bremsbelages und der Bremsscheibe ein Drehmoment auf den Bremsbelag in Drehrichtung der Bremsscheibe, das durch das auslaufseitige Bremsträgerhorn aufgenommen wird.

Allerdings ergibt sich daraus über die Betriebsdauer der Bremsbeläge ein sogenannter tangentialer Schrägverschleiß an den Bremsbelägen derart, dass diese in Hauptbremsrichtung, d.h. bei Vorwärtsfahrt des Nutzfahrzeuges, einlaufseitig stärker verschleißen als auslaufseitig.

In der Folge müssen die Bremsbeläge, sobald sie in den stärker verschlissenen Bereichen ihre Verschleißgrenze erreicht haben, ausgewechselt werden, während in den übrigen Bereichen des Bremsbelages bzw. des Reibbelages jeweils noch nutzbares Verschleißvolumen zur Verfügung steht.

Naturgemäß steht dies einer stets angestrebten Betriebskostenoptimierung entgegen, insbesondere auch deshalb, weil Nutzfahrzeuge üblicherweise mit einer Vielzahl von Scheibenbremsen ausgestattet sind, denen jeweils die genannte Problematik zu eigen ist.

Aus dem Stand der Technik sind zwar Scheibenbremsen bekannt, deren Bremsbeläge Formschlusselemente aufweisen, die korrespondierend in den jeweiligen Bremsträger eingreifen, jedoch sind die damit hergestellten Formschlüsse nicht geeignet, das Problem des Schrägverschleißes zu verhindern. Insbesondere sind die Bremsbeläge nicht in beide Drehrichtungen der Bremsscheibe formschlüssig gehalten.

So ist in der DE 21 38 776 A eine Scheibenbremse offenbart, bei der die Bremsbeläge mit seitlich angeformten Vorsprüngen in Führungsnuten des Bremsträgers gelagert sind, wobei sich bei einer Bremsung der einlaufseitige Vorsprung radial an der oberen Wandung der Führungsnut abstützt, ohne dass der Bremsträger in diesem Bereich wirksam zur Aufnahme eines Drehmoments in der Lage wäre. Eine vergleichbare Konstruktion ist in der DE 22 55 678 A thematisiert, ebenso in der DE 198 57 074 A1 sowie der DE 196 50 425 A1.

Der Erfindung liegt die Aufgabe zugrunde, eine Scheibenbremse der gattungsgemäßen Art so weiterzuentwickeln, dass die Standzeit der Bremsbeläge und die Betriebskosten gesenkt werden.

Diese Aufgabe wird durch eine Scheibenbremse mit den Merkmalen des Anspruchs 1 gelöst.

Die erfindungsgemäße Ausgestaltung der Scheibenbremse, insbesondere der Korrespondenzteile des Bremsträgers einerseits und der Bremsbeläge andererseits führt dazu, dass das bei einer Bremsung wirksame, auf den jeweiligen Bremsbelag einwirkende Drehmoment auf den einlaufseitigen Bereich des Bremsträgers, insbesondere auf das einlaufseitige Bremsträgerhorn einwirkt, so dass der Bremsbelag quasi als Zugmittel wirkt.

Der Bremsbelag ist durch den zumindest einen Formschluss mit dem Bremsträger, der, gemäß der Erfindung einlaufseitig vorgesehen ist, in beide Drehrichtungen der Bremsscheibe mit dem Bremsträger quasi verspannt. D.h., das auf den Bremsbelag wirkende Drehmoment wird zunächst ausschließlich von dem einlaufseitigen Bereich des Bremsträgers, insbesondere hier des Bremsträgerhorns, aufgenommen.

Bei größeren Bremsmomenten, die gleichsam als Drehmoment auf die Bremsbeläge einwirken, kann sich das einlaufseitige Bremsträgerhorn verbiegen und zwar so weit, dass der Bremsbelag auslaufseitig an dem zugeordneten Bremsträgerhorn anliegt. In jedem Fall ist bei einer derartigen Drehmomentenaufnahme gewährleistet, dass ein Schrägverschleiß des Bremsbelages ausgeschlossen ist.

Der Formschluss zwischen dem Bremsbelag und dem Bremsträger kann auf unterschiedliche konstruktive Art hergestellt werden.

Nach der Erfindung ist vorgesehen, dass die jeweilige Belagträgerplatte auf der dem Grund des Bremsträgers zugewandten Seite einen Vorsprung aufweist, der, in Drehrichtung der Bremsscheibe gesehen, an mindestens einer Stützfläche des Bremsträgers anliegt.

Die beiden sich gegenüberliegenden, zwischen sich den zugeordneten Vorsprung des Bremsbelages aufnehmenden Stützflächen sind parallel zueinander angeordnet und glattflächig ausgebildet sowie tangential zur Bremsscheibe verlaufend, so dass der Bremsbelag, bezogen auf die Bremsscheibe, radial eingeschoben werden kann.

Erfindungsgemäß stützt sich zwar der Bremsbelag zumindest einlaufseitig in beide Drehrichtungen der Bremsscheibe am Bremsträger ab, jedoch ist bevorzugt die Abstützung sowohl einlaufseitig wie auch auslaufseitig vorgesehen, so dass der Bremsbelag, bezogen auf eine radiale Mittelachse, spiegelsymmetrisch ausgebildet sein kann. Je nach Drehrichtung der Bremsscheibe, d.h. je nach Vorwärts- oder Rückwärtsfahrt, wechseln die Einlauf- und Auslaufseite. D.h., die Einlaufseite bei Vorwärtsfahrt wird zur Auslaufseite bei Rückwärtsfahrt und umgekehrt.

Eine nicht erfindungsgemäße Ausführungsvariante sieht vor, dass die Abstützung durch einen Formschluss zwischen dem Bremsbelag und dem Bremsträger erfolgt, wozu eine klauenartige Ausbildung in den dem Bremsträgerhorn zugewandten Randbereich der Belagträgerplatte vorgesehen ist, die eine Aufnahmenut aufweist, in die ein daran maßlich angepasster Haltezapfen des Bremsträgerhorns eingesteckt ist, so dass auch dadurch eine Arretierung des Bremsbelages am Bremsträgerhorn in beide Drehrichtungen der Bremsscheibe erreicht ist.

Anstelle einer klauenartigen Ausbildung des Bremsbelages und eines Haltezapfens des Bremsträgerhorns wird nach der erfindungsgemäßen Ausführung das Bremsträgerhorn klauenartig ausgebildet und der Bremsbelag mit einem Haltezapfen versehen, der in die gebildete Nut des Bremsträgerhorns eingreift.

Im Übrigen sind die Formschlusselemente bzw. -ausbildungen des Bremsbelages an der Belagträgerplatte angeordnet.

Durch die quasi Einspannung des Bremsbelages in Drehrichtung der Bremsscheibe sowohl einlauf-wie auslaufseitig, kann der entsprechende Bremsbelag die Funktion einer Strebe übernehmen, wenn einer der beiden Belagschächte ohne die Bremsträgerhörner miteinander verbindende Strebe ausgebildet ist.

Weitere vorteilhafte Ausbildungen der Erfindung sind in den Unteransprüchen gekennzeichnet.

Nicht erfindungsgemäße Ausführungsbeispiele werden nachfolgend anhand der beigefügten Zeichnungen beschrieben.

Es zeigen:
- Figur 1: eine Scheibenbremse nach dem Stand der Technik in einer Draufsicht
- Figuren 2-24: Ausführungsbeispiele von Einzelheiten nicht erfindungsgemäßen Scheibenbremsen in unterschiedlichen Ansichten

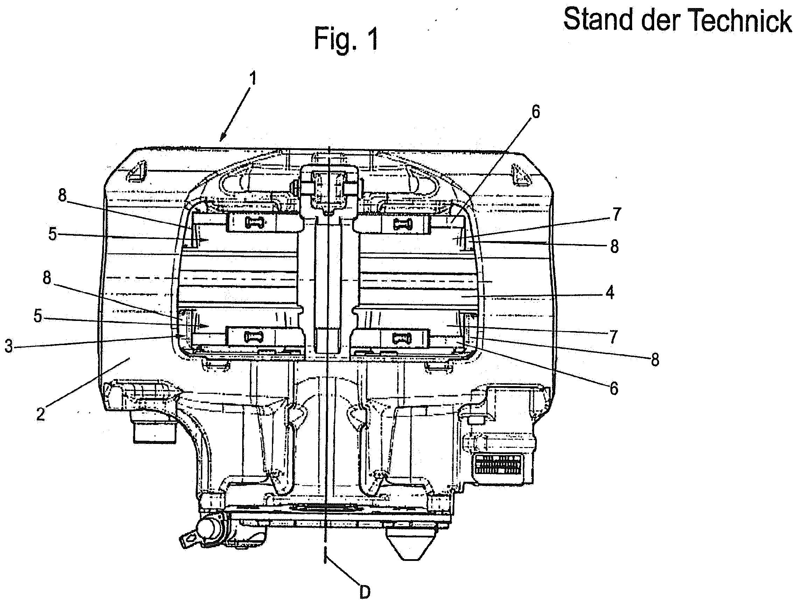

In der **Figur 1** ist eine Scheibenbremse 1 nach dem Stand der Technik abgebildet, mit einem eine fahrzeugseitige Bremsscheibe 4 übergreifenden Bremssattel 2, der auf einem ortsfesten Bremsträger 3, bezogen auf die Achse D der Bremsscheibe 4 axial verschiebbar gelagert ist.

Im Bremsträger 3 sind beidseits der Bremsscheibe 4 Bremsbeläge 5 angeordnet, die jeweils aus einer Belagträgerplatte 6 und einem darauf befestigten Reibbelag 7 bestehen.

Dabei sind die Bremsbeläge 5 in einem Belagschacht positioniert, der beidseitig durch Bremsträgerhörner 8 begrenzt ist.

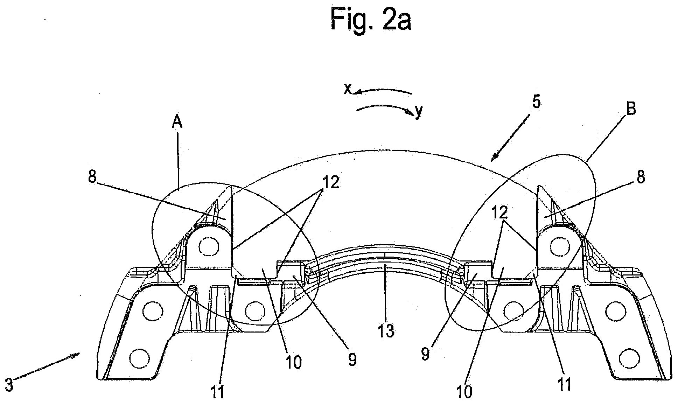

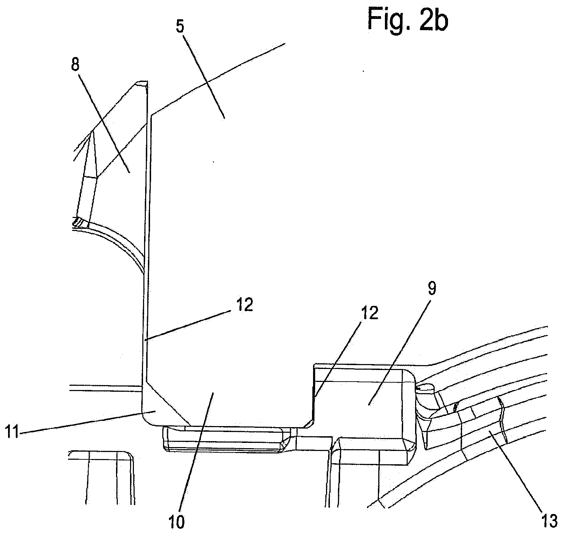

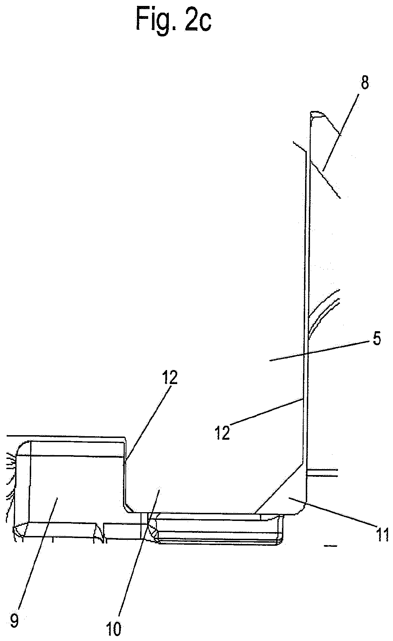

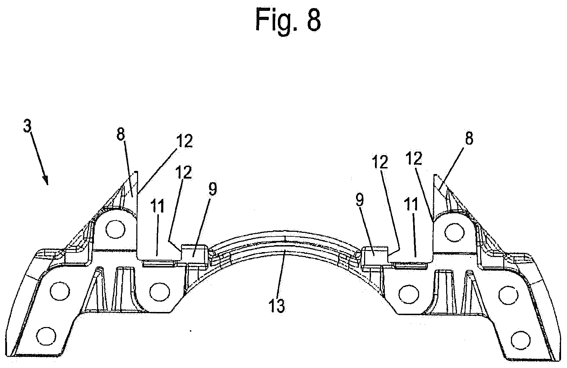

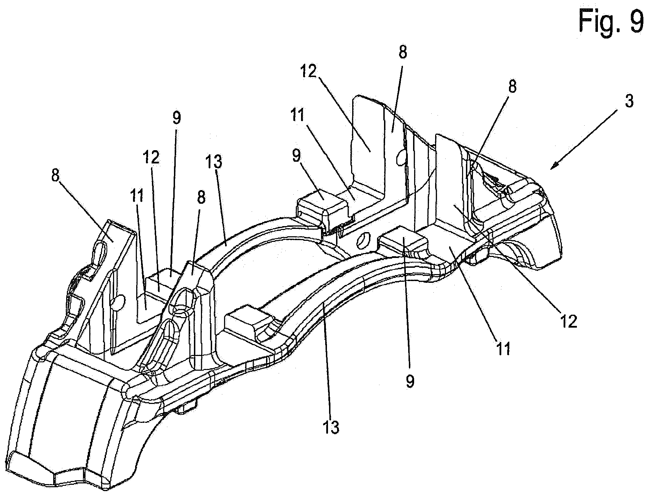

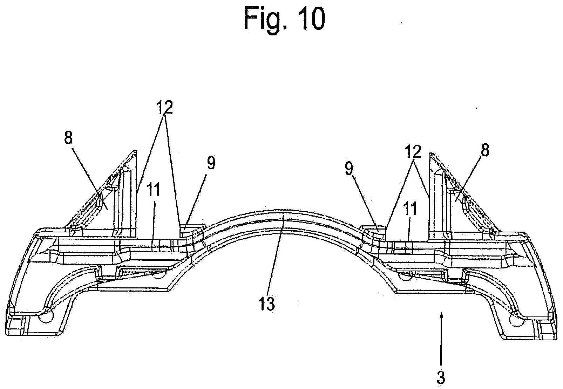

In den **Figuren 2-21** ist jeweils ein nicht erfindungsgemäßer Bremsträger 3 als Einzelheit dargestellt, wobei die **Figur 2a****)**) eine Vorderansicht des Bremsträgers 3 mit eingesetztem Bremsbelag 5 wiedergibt, während die **Figuren 2b****) und** **2c**) vergrößerte Ausschnitte A und B der Baueinheit nach Figur 2a) wiedergeben.

Es ist zu erkennen, dass, jeder Bremsbelag 5 zumindest einlaufseitig, im Beispiel auch auslaufseitig, mittels eines Formschlusses in beide Drehrichtungen x, y der Bremsscheibe 4 am Bremsträger 3 gehalten ist.

Hierzu weist der Bremsträger 3 im Bereich der Bremsträgerhörner 8 jeweils am Grund des Belagschachtes einen angeformten Höcker 9 auf, der mit Abstand zum zugeordneten Bremsträgerhorn 8 in Richtung des Bremsbelages 5 vorsteht.

Die Bremsträgerhörner 8 weisen auf ihrer dem Bremsbelag 5 zugewandten Seite jeweils eine Stützfläche 12 auf, die, bezogen auf die Bremsscheibe 4, tangential verläuft, ebenso wie eine Stützfläche 12 des Höckers 9, die der Stützfläche 12 des Bremsträgerhorns 8 zugewandt und dazu parallel verläuft.

Damit ist eine Ausnehmung 11 gebildet, in die ein Vorsprung 10 des Bremsbelages 5 ragt, die durch seitliche Anlage an den beiden Stützflächen 12 des Bremsträgerhorns 8 und des Höckers 9 in beide Drehrichtungen der Bremsscheibe 4 durch Formschluss gehalten ist, wobei die Stützflächen 12 in beide Drehrichtungen x, y der Bremsscheibe 4 ein Widerlager bilden.

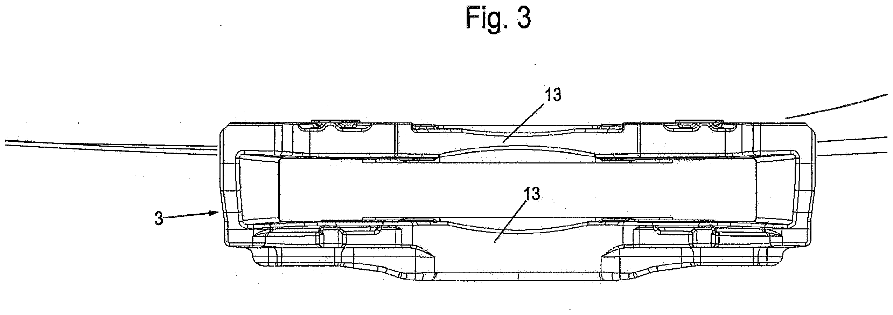

In der **Figur 3****,** die eine Unteransicht des Bremsträgers 3 wiedergibt, ist zu erkennen, dass die dem jeweiligen Belagschacht zugeordneten Bremsträgerhörner 8 durch jeweils eine Strebe 13 miteinander verbunden sind.

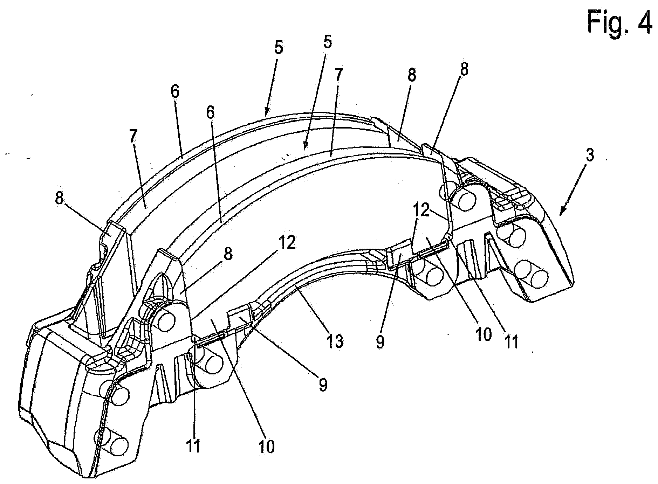

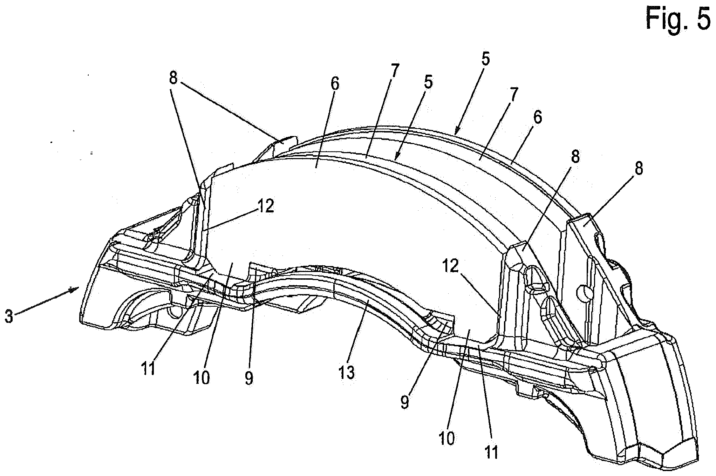

In der **Figur 4** ist die Einheit Bremsträger 3 und Bremsbeläge 5 in einer perspektivischen Ansicht zu erkennen, wobei hier die Vorderansicht abgebildet ist, während die **Figur 5** die Rückansicht wiedergibt, die in montierter Stellung einer Radfelge des Nutzfahrzeuges zugewandt ist.

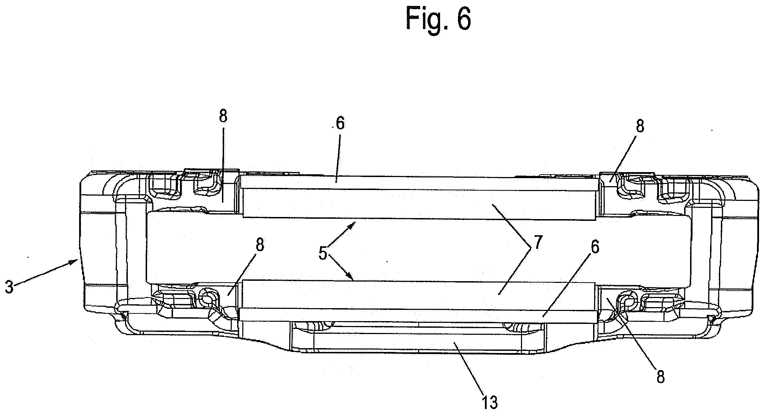

Die **Figur 6** zeigt eine Draufsicht des Bremsträgers 3 mit eingesetzten Bremsbelägen 5.

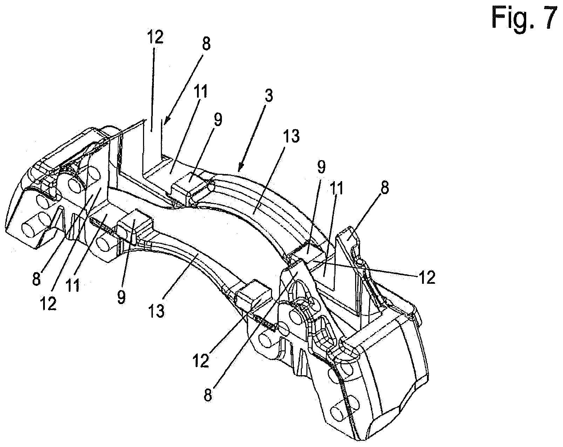

Die **Figuren 7-10** zeigen den Bremsträger 3 als Einzelheit in verschiedenen Ansichten, wobei die Bremsträgerhörner 8 jedes Belagschachtes durch eine Strebe 13 miteinander verbunden sind.

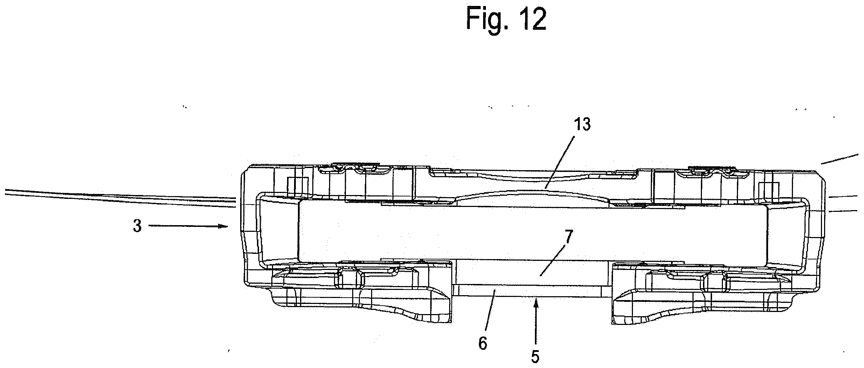

In den **Figuren 12-15** ist ein Bremsträger 3 mit eingesetzten Bremsbelägen 5 abgebildet, bei dem die Bremsträgerhörner 8 lediglich eines Belagschachtes mit einer Strebe 13 verbunden sind, während die Bremsträgerhörner 8 des anderen Belagschachtes nicht mit einer solchen Strebe 13 verbunden sind.

Hier nun übernimmt der eingesetzte Bremsbelag 5 die Funktion der Strebe 13, der dann quasi im Sinne einer Zugstrebe wirkt und zwar dadurch, dass er sowohl einlauf- wie auch auslaufseitig zwischen den Höckern 9 und den Bremsträgerhörnern 8 mit dem angeformten Vorsprung 10 eingespannt ist.

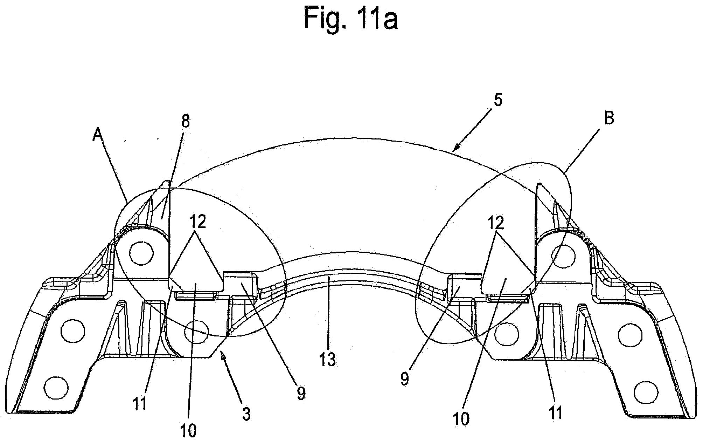

Die Figur 12 zeigt die Unteransicht des Bremsträgers 3, während die **Figur 11a**) eine Vorderseite wiedergibt, mit Strebe 13, wobei die Vorderseite in montierter Stellung der Scheibenbremse bzw. des Bremsträgers 3 die einer Radfelge abgewandte Seite bildet.

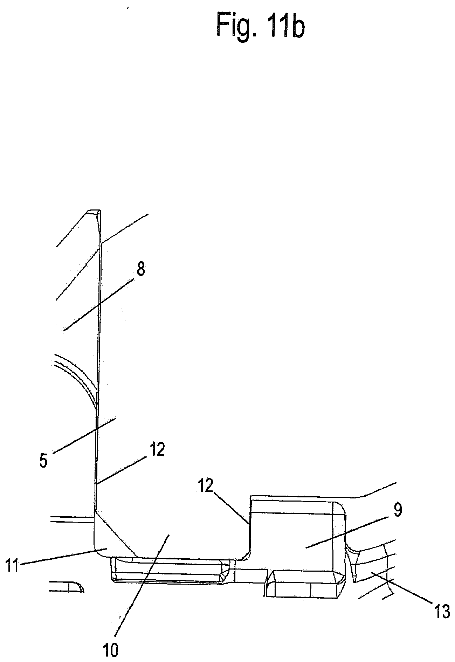

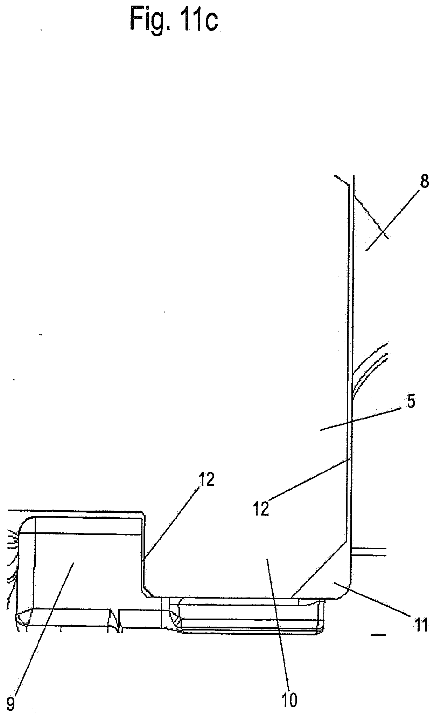

Die Figuren **11b****) und** **11c****)** geben jeweils einen vergrößerten Ausschnitt A (Figur 11b) und B (Figur 11c) wieder.

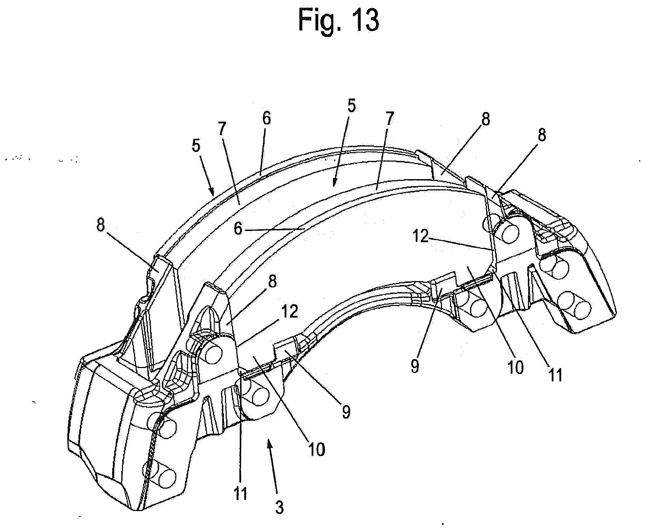

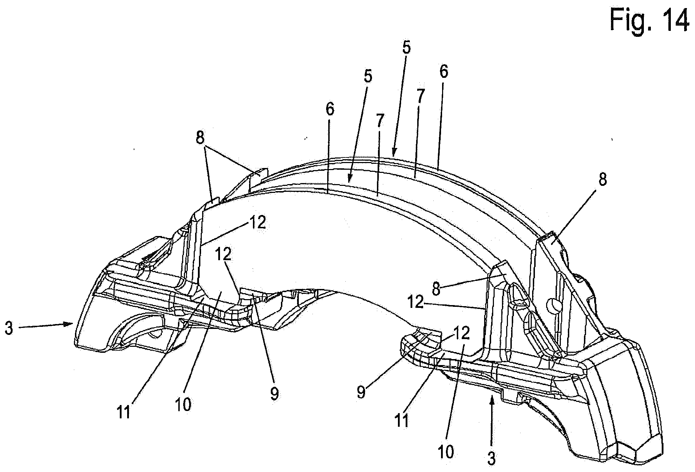

Die **Figur 13** zeigt die Ansicht der Figur 11a) in perspektivischer Darstellung, während die Figur 14, gleichfalls als perspektivische Abbildung die Rückseite des Bremsträgers 3 mit eingesetzten Bremsbelägen 5 wiedergibt, die, wie erwähnt, in Funktion einer Radfelge zugewandt ist, wobei hier deutlich das Fehlen der Strebe 13 im Bereich des Belagschachtes zu erkennen ist.

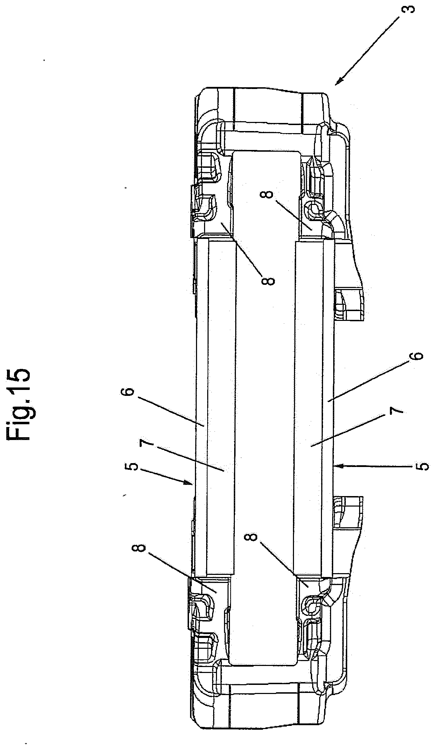

Die **Figur 15** schließlich gibt die Draufsicht auf den Bremsträger 3 wieder.

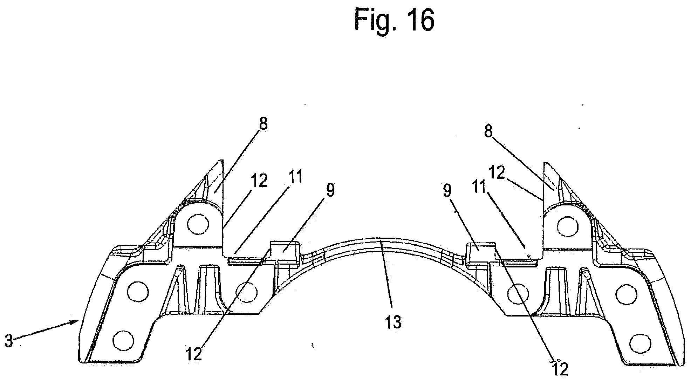

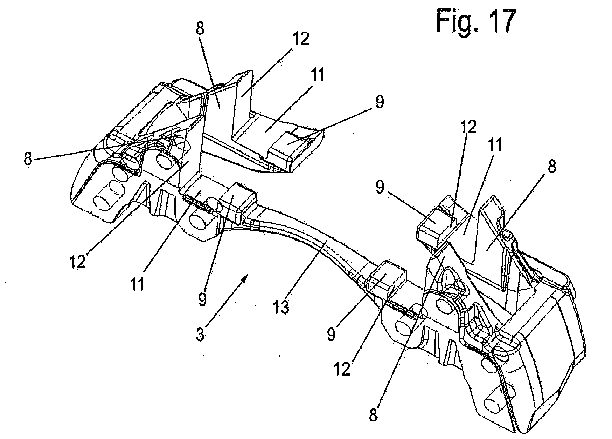

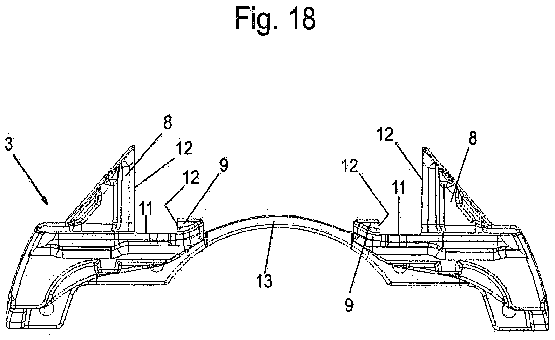

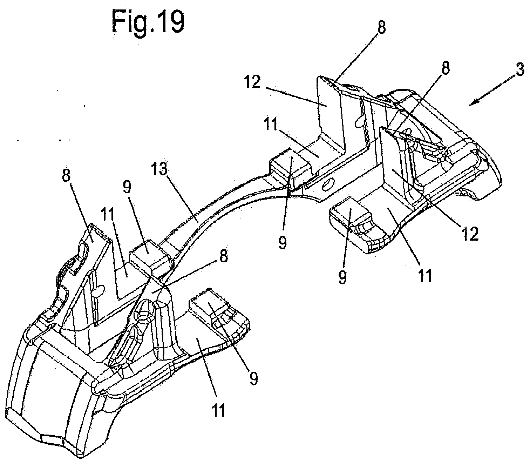

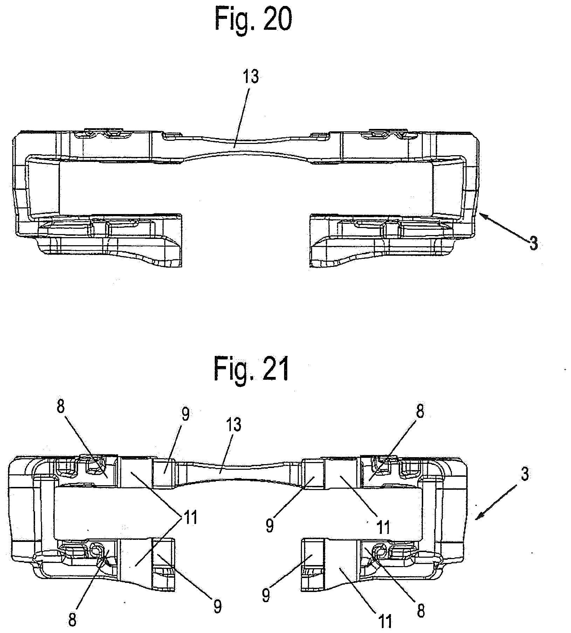

Die **Figuren 16-21** zeigen den Bremsträger 3 nach den Figuren 11-15 in Alleinstellung, wobei die **Figur 16** der Vorderseite gemäß Figur 13, die **Figur 17** eine perspektivische Ansicht des Bremsträgers 3, von der Vorderseite her gesehen und die **Figur 19** eine perspektivische Seite von der Rückseite her gesehen. Die **Figur 18** gibt die Rückseite des Bremsträgers 3 entsprechend der Abbildung in Figur 14 wieder, während die **Figur 20** eine Unteransicht des Bremsträgers 3 und die **Figur 21** eine Draufsicht auf den Bremsträger 3 zeigt.

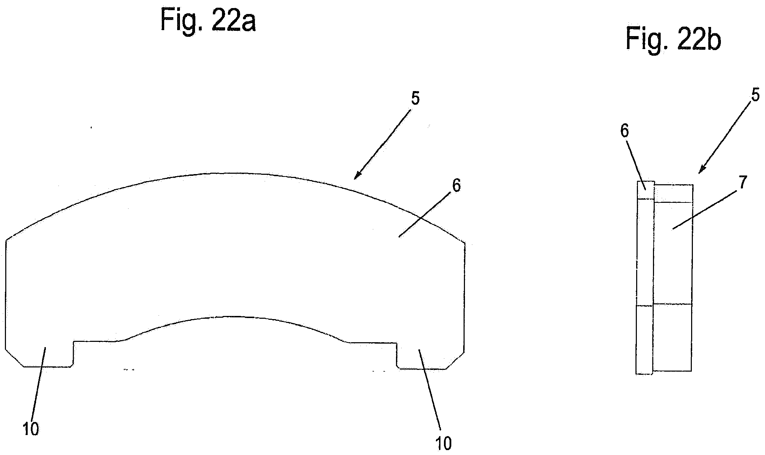

Die **Figur 22a****)** zeigt einen Bremsbelag mit einer Vorderansicht der Belagträgerplatte 6, an dem die Vorsprünge 10 angeformt sind. Die **Figur 22b****)** zeigt den Bremsbelag 5 in einer Seitenansicht.

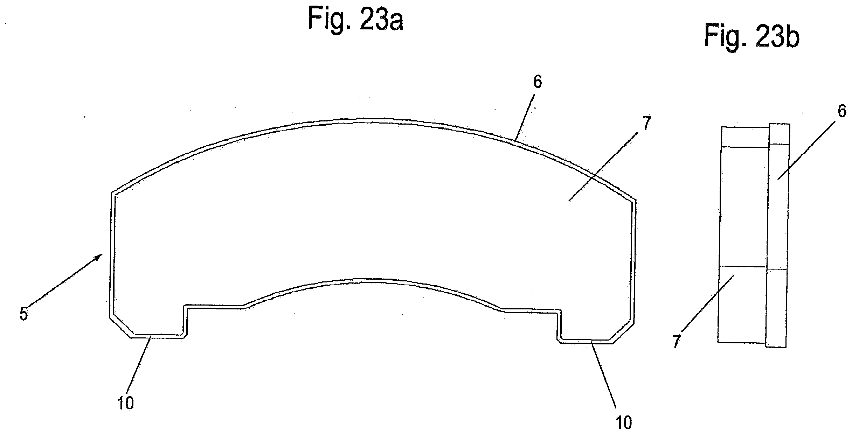

Die **Figur 23a****)** ist eine Ansicht des Bremsbelages 5 auf den Reibbelag 7, der gegenüber der Außenkontur der Belagträgerplatte 6 geringfügig zurückgesetzt ist, jedoch in der Konturenform identisch ist. Die Figur 23b) schließlich gibt den Bremsbelag 5 gleichfalls in einer Seitenansicht wieder.

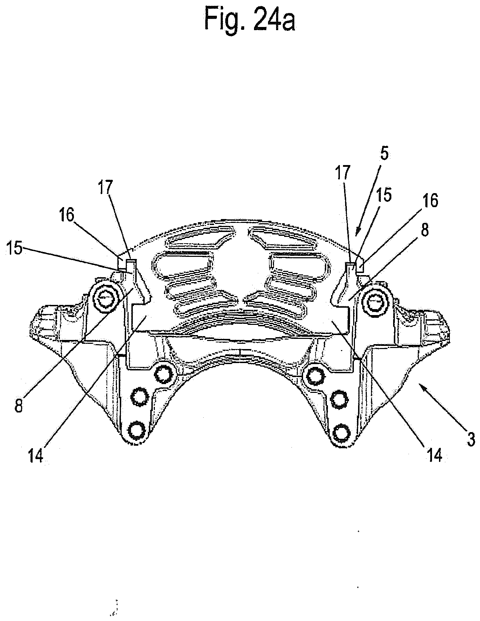

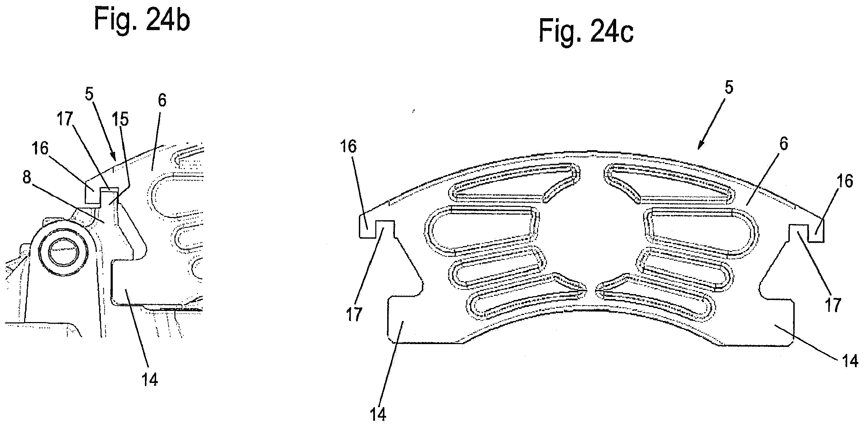

In der Figur 24a) ist ein in den Bremsträger 3 eingesetzter Bremsbelag 5 erkennbar, wobei für einen Formschluss zwischen dem Bremsbelag 5 und dem Bremsträger 3 an der Belagträgerplatte 6, wie insbesondere in der Figur 24c) deutlich erkennbar ist, an den sich gegenüberliegenden, die Längsseiten des Bremsbelages 5 begrenzenden Randbereichen Klauen 16 ausgebildet sind, jeweils mit einer Nut 17, in die ein dem Grund des Belagschachtes abgewandt an das Bremsträgerhorn 8 angeformter Haltezapfen 15 derart eingreift, dass der Bremsbelag 5 in beide Drehrichtungen der Bremsscheibe 4 gehalten ist und zwar jeweils durch einen der beiden Formschlüsse.

In der Figur 24b) ist die Anbindung des Bremsbelages 5 in einem Teilausschnitt der Figur 24a) vergrößert dargestellt. Dabei ist zu erkennen, ebenso wie in der Figur 24c), die den Bremsbelag 5 als Einzelheit wiedergibt, dass an die Belagträgerplatte 6 auf der der Klaue 16 gegenüberliegenden Seite ein Ansatz 14 angeformt ist, der in eine daran angepasste Aufnahme des Bremsträgerhorns 8 eingreift.

### Bezugszeichenliste

- 1: Scheibenbremse
- 2: Bremssattel
- 3: Bremsträger
- 4: Bremsscheibe
- 5: Bremsbelag
- 6: Belagträgerplatte
- 7: Reibbelag
- 8: Bremsträgerhorn
- 9: Höcker
- 10: Vorsprung
- 11: Ausnehmung
- 12: Stützfläche
- 13: Strebe
- 14: Ansatz
- 15: Haltezapfen
- 16: Klaue
- 17: Nut

## Patentansprüche

1. Scheibenbremse für ein Nutzfahrzeug, mit einem eine Bremsscheibe (4) übergreifenden Bremssattel (2), der, bezogen auf die Bremsscheibe (4), axial verschiebbar an einem fahrzeugseitigen Bremsträger (3) gehalten ist, wobei der Bremsträger (3) beidseitig der Bremsscheibe (4) jeweils einen Belagschacht aufweist, der ein- und auslaufseitig durch Bremsträgerhörner (8) begrenzt ist und in dem ein eine Belagträgerplatte (6) und einen daran befestigten Reibbelag (7) aufweisender Bremsbelag (5) positioniert ist, wobei jeder Bremsbelag (5) sich bei einer Bremsung zumindest einlaufseitig in Drehrichtung der Bremsscheibe (4) am Bremsträger (3) abstützt,
**dadurch gekennzeichnet, dass**
der dem Grund des Belagschachtes zugewandten Randbereich der Bremsbelag (5) mit mindestens einem vorstehenden Ansatz versehen ist, der in eine Aussparung des anliegenden Bremsträgerhorns (8) unter Bildung eines Formschlusses eingreift und wobei
das Bremsträgerhorn (8) an seinem freien Ende als Klaue (16) ausgebildet ist, mit einer Nut (17), in die ein Haltezapfen (15) des Bremsbelages (5) eingreift.

## Claims

1. A disk brake for a utility vehicle, having a brake calliper (2) that engages over a brake disc (4) and is held on a vehicle-side brake carrier (3) such that it can be moved axially in relation to the brake disc (4), the brake carrier (3) having on either side of the brake disc (4) a pad channel that is bounded on the entry and exit sides by brake-carrier horns (8) and in which is positioned a brake pad (5) having a pad-carrier plate (6) and a friction pad (7) that is fixed to the pad-carrier plate (6), during braking each brake pad (5) resting on the brake carrier (3) at least on the entry side in the direction of rotation of the brake disc (4), **characterised in that** the edge region of the brake pad (5) facing the base of the pad channel is provided with at least one projecting lug that engages in a recess of the adjacent brake-carrier horn (8) creating a form fit, the free end of the brake-carrier horn (8) being designed as a claw (16) having a groove (17) in which the retaining pin (17) of the brake pad (5) engages.

## Revendications

1. Frein à disque d'un véhicule utilitaire, comprenant un étrier (2) de frein, qui chevauche un disque (4) de frein et qui, rapporté au disque (4) de frein, est maintenu avec possibilité de déplacement axial sur un flasque (3) de frein du côté du véhicule, le flasque (3) de frein ayant, des deux côtés du disque (4) de frein, respectivement, un puits de garniture, qui est délimité du côté de l'entrée et du côté de la sortie par des cornes (8) du flasque de frein et dans lequel est mise en position une garniture (5) de frein, ayant une plaque (6) de support de garniture et une garniture (7) de friction, qui y est fixée, dans lequel chaque garniture (5) de frein s'appuie, lors d'un freinage, au moins du côté de l'entrée, dans le sens de rotation du disque (4) de frein, sur le flasque (3) de frein,
**caractérisé en ce que**
la partie de bord, tournée vers le fond du puits de garniture, de la garniture (5) de frein est pourvue au moins d'une saillie, qui pénètre, avec formation d'une complémentarité de forme, dans un évidement de la corne (8) du flasque de frein s'appliquant, et dans lequel
la corne (8) du flasque de frein est constituée, à son extrémité libre, en griffe (16), ayant une rainure (17), dans laquelle pénètre un tenon (15) de retenue de la garniture (5) de frein.
